(19)

Europäisches
Patentamt
European
Patent Office
Office européen
des brevets

(11) **EP 2 048 604 A1**

(12) **EUROPEAN PATENT APPLICATION**

(43) Date of publication:
**15.04.2009 Bulletin 2009/16**

(51) Int Cl.:
**G06N 3/12** *(2006.01)*

(21) Application number: **07118276.0**

(22) Date of filing: **11.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Honda Research Institute Europe GmbH**
**63073 Offenbach/Main (DE)**

(72) Inventors:
• **Ong, Yew Soon**
**12-398, Singapore 642652 (SG)**
• **Lim, Dudy**
**Singapore 648398 (SG)**

• **Jin, Yaochu, Dr.**
**63110 Rodgau (DE)**
• **Sendhoff, Bernhard, Dr.**
**63486 Bruchköbel (DE)**

(74) Representative: **Rupp, Christian**
**Mitscherlich & Partner**
**Patent- und Rechtsanwälte**
**Sonnenstraße 33**
**80331 München (DE)**

Remarks:
Amended claims in accordance with Rule 137(2) EPC.

(54) **A dual surrogate memetic framework for single/multi-objective evolutionary optimization of computatoinally expensive problems**

(57)     A method for the optimization of real-world objects in terms of physical parameters comprises the steps:
- Creating an offspring population ($P_o$) by applying an evolutionary operator to a parental population ($P_C$), wherein the populations ($P_0$, $P_1$) comprise individuals representing a real-world object to be optimized in terms of its physical parameters;
- Performing local refinements on at least one individual of the offspring population ($P_o$);
- Selecting a new parental population ($P_C$) from a selection pool ($P_S$) by using a fitness function, the fitness function using physical parameters for assessing the fitness;
- Repeating the above steps until a predetermined termination criterion is met; and
- Outputting the optimized individual as a representation of an optimized real-world object.

The method may be applied in all forms of design or search problems that contain computationally expensive functions, simulator or analysis code, such as drug design, material design, rainfall prediction, aerospace design, aircraft design, aerodynamic design, structural design, electromagnetic design, physics-based modelling and etc.

Fig. 1

## Description

The present invention relates to a method for optimising models or designs which are applied in engineering to represent and to design concrete physical structures such as bridges, airfoils, rotor blades and the like but also chemical molecules.

BACKGROUND OF THE INVENTION AND PRIOR ART

Design of complex systems encompasses a wide range of activities whose goal is to determine the optimum characteristics of a product before it is manufactured. A strong capability to engineer reliable and high quality products is necessary in all engineering design companies to stay competitive in an increasingly global economy, which is constantly exposed to high commercial pressures. Good engineering design know-how results inleads to lower time to market and better quality at lower cost.

A continuing trend in science and engineering is the use of increasingly high-fidelity accurate analysis codes in the design process. Such analysis codes play a central role in the design engineering process since they aid designers and scientistsengineers in validating designs and also enable them to study the effect of altering key design parameters on product performance. However, a moves towards the use of accurate analysis models results in high computational costs in the design optimization process, which consequently leads to longer design cycle times.

In many application areasMore particularly, coupled multidisciplinary system design analysis requiring Computational Structural Mechanics (CSM), Computational Fluid Dynamics (CFD), Computational Electro-Magnetics (CEM) or *ab initio* simulation often cost from many minutes, hours, days to months of supercomputer time. Since finding the optimum design typically requires significantly large number of analyses, the search process often becomes computationally prohibitive for this class of problems.

For instance, when evolving a basic conceptual design of an automobile or spacecraft, the scientist evaluating the designs may fail to meet the tight deadline, due to the intractable simulation times if a robust and high quality is solutions to be desired. InAn-other example is drug design, : the application of *ab initio* simulations to biology, such as the study of peptide conformations, generates astonishing accuracy electronic structure on small molecules, but each analysis will take many hours to process, hence leading to great financial implicationshigh costs. Many other interesting molecules, such as proteins, are simply too expensive computationally expensive to be considered in reality. This poses a serious impediment to arrive at good design when high-fidelity analysis codes are used for complex design problems in science and engineering.

In other words, a drawback of existing stochastic optimization approaches is the immense computational effort involved when used for solving practical complex engineering problems in science and engineering. In particular, the associated high computational costs associated is enormous when high-fidelity simulation models (often consumes many minutes to hours of computer time) are used to provide as the fitness measures. The causes of high evaluation cost and its effects on the number of evaluations that can be afforded differ widely from one problem to another.

It is therefore an object of the present invention to retain the appeal of the design optimization framework that can handle computationally expensive design engineering problems and produce high quality designs under limited computational budgets.

SHORT SUMMARY OF THE INVENTION

This object is achieved by a method for optimizing engineering designs according to the independent claim. Advantageous embodiments are defined in the dependent claims.

The present invention deals with the design of an efficient optimization framework for handling computationally expensive design problems. In particular, it deals with the design of surrogate-assisted single/multiobjective evolutionary framework for handling computationally expensive design problems.

The backbone of the invention is a single/multiobjective memetic method. Memetic methods represent a hybrid, population-based approach for heuristic search in optimization problems. They combine a genetic algorithm with different kinds of local search, e.g. stochastic search. For some engineering domains, memetic methods have been shown to be more efficient than genetic algorithms. In particular, they have been successfully applied to a multitude of real-world engineering problems ranging from the prediction of protein structures to the design of spacecraft trajectories (cf. e.g. Special Issue on Memetic Algorithms, IEEE Transactions on Systems, Man and Cybernetics - Part B, Vol. 37, No. 1, Ong Y.S.; Krasnogor, N.; Ishibuchi H. (Eds.), Feb 2007).

The memetic method according to the invention conducts simultaneous local searches on multiple surrogate models. Surrogates, surrogate models or surrogate functions are computationally inexpensive approximations of an expensive analysis code. In particular, Aapproximation means in particular that surrogate functions model only certain aspects of the design while abstracting from others. Different surrogate functions may model different aspects of a particular design or model.

For example, in the context of engineering, surrogates may be simplified physical models of the an expensive analysis or simulation code. Or they may be approximations of the expensive simulation, constructed by interpolating or smoothing known values of the objective function. Interpolation approximations may by constructed e.g. by kriging, or polynomial interpolants. Also, surrogates may be model-approximation hybrids.

The backbone of the invention is a single/multi-objective memetic algorithm that conducts simultaneous local searches on multiple surrogate models with According to the invention, the memetic algorithm realizes two core goals, i.e., 1) to mitigate the impact of 'curse of uncertainty', and 2) to benefit from the 'bless of uncertainty' in approximation error.

The 'curse of uncertainty' on surrogate-assisted single/multi-objective optimization can be briefly defined as the phenomenon where the inaccuracy of the surrogates causes the search to converge to a false optimum in single objective optimization or to a false Pareto front in multi-objective optimization. By the 'bless of uncertainty,' it is meant the cases in which the approximation error introduced by the surrogate(s) brings about accelerated convergence to the true global optimum or the Pareto front.

The resulting optimized individual represents, in an encoded manner, the real-world object optimized in terms of physical parameters. Thus, the result of the optimization method may be used as a building plan for a real-world object which is different, in terms of physical parameters, from non-optimized real-world objects.

SHORT DESCRIPTION OF THE FIGURES

These and other aspects and advantages of the present invention will become more apparent when reading the following detailed description of the invention, in connection with the annexed drawing, in which

Fig. 1    shows a flow diagram of a method according to a first embodiment of the invention; and

Fig. 2    shows a flow diagram of a method according to an embodiment of the invention.

DETAILED DESCRIPTION OF THE INVENTION

The method according to the invention applies a novel memetic algorithm to the engineering and the optimization of physical structures.

In a preliminary step, a model M for representing the real-world object to be optimized is determined. The model M may represent one or several physical characteristics of the object, such as the three-dimensional structure, the structural mechanics, the fluid dynamics, the electro-magnetics, combinations thereof and any other physical aspects of the real-world object (e.g. stiffness). The model M may further comprise one or several model parameters p, such as weight, length or others that may act as inputs to the optimization procedure.

A model M may be input into a cost or objective function C reflecting the relevant costs associated with the model. Optimization then amounts to finding parameters p of a model M such that the cost function C becomes minimal. In other words, the optimization task may be expressed as

$$\min_p C(M(p)). \qquad (1)$$

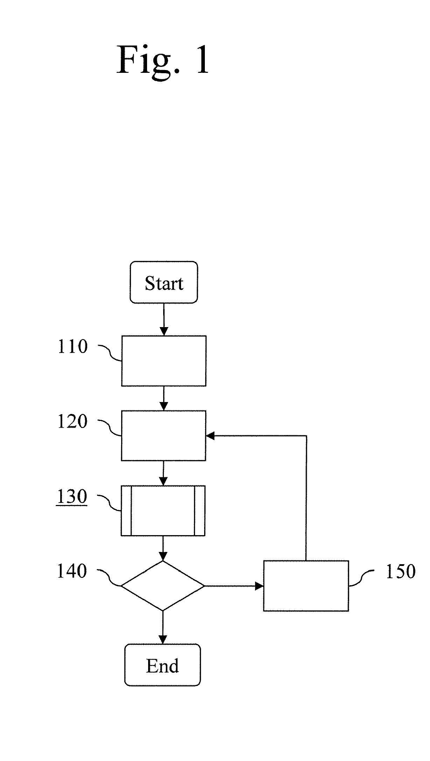

**Figure 1** shows a dual surrogate memetic framework or, in other words, a flow-diagram of a method for single/multi-objective optimization according to a first embodiment of the invention.

In step 110, a parental population $P_C$ is initialized and evaluated. A population is a plurality of individuals. An individual represents, e.g. in the form of a string as already stated above, a model of a real-world object to be optimized. Evaluation amounts to applying the cost or fitness function to the individual, as explained with reference to term (1) above.

In step 120, an offspring population $P_O$ is created from the parent population $P_C$ by applying an evolutionary operator on it. The evolutionary operator may e.g. be a mutation operator, known from the field of genetic optimization methods..

In step 130, local refinements may be performed or applied to part or all of the individuals. During the local refinement, a local search algorithm may search a local optimum using one or several surrogate models, which are less costly to evaluate than the original design. In other words, the objective function is evaluated with respect to a surrogate model instead of the original objective function, wherein the surrogate model may reflect certain characteristic properties of the original model while abstracting from others.

The search algorithm starts from the individuals generated using genetic variations, i.e. evolutionary operators such as mutation. Solutions or local optima found on different surrogates are evaluated using the true fitness, and the starting solution is replaced by the best solution. In case of multi-objective optimization, the non-dominated solution will replace the starting solution. If more than one solution is non-dominated, the others or the rest may be stored in an archive A.

The evaluation of the found individuals with the original fitness function may serve two purposes: 1) to judge the quality of the surrogate model and 2) to ensure correct convergence of the evolutionary algorithm (EA).

In step 140, it is checked whether the procedure has already reached a termination condition or stop criterion. If yes, the procedure ends. The best individual(s) may then be used for building a real-world physical design according to the optimized parameters.

If not, the procedure continues with step 150, in which a new parental population $P_C$' is selected from a selection pool. The selection pool is a set of candidate individuals from which the next generation of individuals may be selected. The selection pool may comprise the current parent population $P_C$ and the current offspring population $P_O$. In the multi-objective case, the parent population for the next generation may also include the archived solutions.

After step 150, the procedure loops back to step 120 to create a new offspring population.

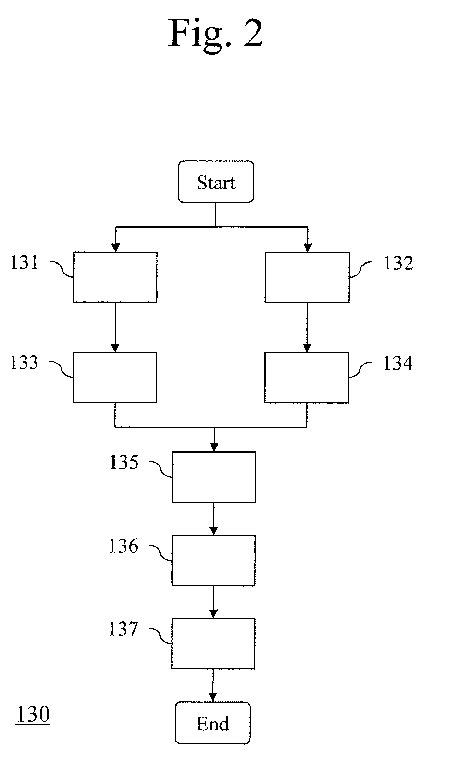

**Figure 2** shows a detailed flow diagram of the local refinement step 130 shown in figure 1.

In the dual framework according to the invention, two different kinds of surrogate models are applied in the local search. One surrogate model is designed to generate robust predictions to mitigate the negative effects of the 'curse of uncertainty' on search. This is realized by using an ensemble surrogate model consisting of different types of models, such as radial basis functions, Kriging or Gaussian process, and polynomial regression. Meanwhile, to benefit from the 'bless of uncertainty', the smoothing properties of low-order polynomial regression (PR) is taken advantage of for dealing with high-dimensional and multi-modal problems. In optimization, the smoothing capability of the PR model also poses significant advantages on noisy functions such as faster convergence. Besides, generating PR models also consumes very low computational efforts. This makes the use of PR very efficient for creating online surrogate models. Last but not least, it is worth noting that the use of multiple surrogate models in the DSM framework also brings about improved search diversity, which is desirable for both single and multi-objective optimization.

Referring now to the flow diagram, a first local surrogate model $M_1$ is built in step 131. This surrogate model is characterized in that it can provide robust prediction accuracy. Methods to generate a more robust surrogate model may comprise the use of low-order polynomial model.

In step 132, which may be carried out in parallel, one or several other surrogate models $M_2$, $M_3$ to $M_k$ may be built. In one embodiment of the invention, their characteristic property is that they facilitate greater diversity in the search.

In step 133, a local search or refinement is carried out using surrogate model $M_1$.

In step 134, a local search or refinement is carried out using surrogate models $M_2$ to $M_k$.

In step 135, all individuals are evaluated, including those found by local refinements and those not having undergone local search, using the exact or original fitness or objective function.

In step 136, every individual in the population is replaced with the best local optimum found from using surrogate models $M_1$, $M_2$, $M_3$, ...., $M_k$.

In step 137, other non-dominating solutions that are found may be stored in an archive $A_1$.

In other words, in evaluating the individuals, separate local refinements are conducted on the set of surrogate models built to arrive at different local optima. From the local optima found by the diverse surrogates, one of the local optima is then used to replace the original individual in the spirit of Lamarckian or Baldwinian Learning, while the others are archived if they are neither dominant nor dominated by the original individual. This learning archive, $A_1$ may be combined with the selection pool to promote greater diversity in subsequent parental population, Pc.

APPLICATIONS OF THE INVENTIVE METHOD.

The method according to the invention may be applied in all forms of design or search problems that contain computationally expensive functions, simulator or analysis code, such as drug design, material design, rainfall prediction, aerospace design, aircraft design, aerodynamic design, structural design, electromagnetic design, physics-based modelling and etc.

For this purpose, the concrete design has to be coded using an appropriate representation first, e.g. using finite elements. This representation may then be used in order to form an objective function with respect to certain functional parameters of the design, such as e.g. stiffness.

**Claims**

1. Method for the optimization of real-world objects in terms of physical parameters, comprising the steps:

   - Creating an offspring population ($P_O$) by applying an evolutionary operator to a parental population ($P_C$), wherein the populations ($P_0$, $P_1$) comprise individuals representing a real-world object to be optimized in terms of its physical parameters;
   - Performing local refinements on at least one individual of the offspring population (Po);
   - Selecting a new parental population ($P_C$) from a selection pool ($P_S$) by using a fitness function, the fitness function using physical parameters for assessing the fitness; and
   - Repeating the above steps until a predetermined termination criterion is met; and
   - Outputting the optimized individual as a representation of an optimized real-world object.

2. Method according to claim 1, wherein the local refinements are performed using a first surrogate model with robust prediction accuracy and a second surrogate model that facilitates greater diversity in the search.

3. Method according to claim 2, wherein the first surrogate model is a low-order polynomial model.

4. Method according to claim 2, wherein the second surrogate model is generated from an ensemble of multiple surrogate models.

5. Method according to claim 4, wherein the ensemble of multiple surrogate models comprises a Gaussian process model, a polynomial model and a radial basis function network.

**6.** Method according to claim 2, wherein every individual is replaced with the best local optimum found from using the first surrogate model and the second surrogate model and other found solutions are stored in a learning archive (A).

**7.** Method according to claim 1, wherein the selection pool comprises the learning archive (A).

**8.** Method according to claim 2, wherein the local search direction is determined either randomly, or changed with the number of generations.

**9.** Computer-readable medium, comprising instructions that, when executed on a computer, implement a method according to one of claims 1 to 8.

**10.** Use of a method according to one of claims 1 to 9 in one of the following applications: drug design; material design; rainfall prediction; aerospace design; aircraft design; aerodynamic design; structural design; electromagnetic design and physics-based modelling.

**Amended claims in accordance with Rule 137(2) EPC.**

**1.** Method for the optimization of real-world objects in terms of physical parameters, comprising the steps:

- Creating an offspring population ($P_o$) by applying an evolutionary operator to a parental population ($P_c$), wherein the populations ($P_0$, $P_1$) comprise individuals representing a real-world object to be optimized in terms of its physical parameters;
- Performing simultaneous local refinements using dual surrogates on at least one individual of the offspring population (Po);
- Selecting a new parental population ($P_c$) from a selection pool ($P_s$) by using a fitness function, the fitness function using physical parameters for assessing the fitness;
- Repeating the above steps until a predetermined termination criterion is met; and
- Outputting the optimized individual as a representation of an optimized real-world object.

**2.** Method according to claim 1, wherein the local refinements are performed using the first type of surrogate model with robust prediction accuracy and the second type of surrogate model that provides a smoothing effect.

**3.** Method according to claim 2, wherein the first type of surrogate model is a to provide robust prediction, such as an ensemble of multiple surrogate models.

**4.** Method according to claim 2, wherein the second type of surrogate model is able to smooth the fitness landscape, such as a low-order polynomial regression model.

**5.** Method according to claim 43, wherein the ensemble of multiple surrogate models comprises a Gaussian process model, a polynomial model and a radial basis function network.

**6.** Method according to claim 2, wherein every individual is replaced with the best local optimum found from using the first type of surrogate model and the second type of surrogate model and other found solutions are stored in a learning archive (A).

**7.** Method according to claim 2, wherein every individual is replaced with the dominating solution found from using the surrogate models and other found solutions are stored in a learning archive (A).

**8.** Method according to claim 1, wherein the selection pool also comprises the learning archive (A), in addition to parent and offspring populations in the context of multi-objective optimization.

**9.** Method according to claim 2, wherein the context of multi-objective optimization, local searches are performed on the weighted fitness landscape and wherein the used weight vector indicates the local search direction and is determined either randomly, or changed with the number of generations.

**10.** Computer-readable medium, comprising instructions that, when executed on a computer, implement a method according to one of claims 1 to 89.

**11.** Use of a method according to one of claims 1 to 9 in one of the following applications: drug design; material design; rainfall prediction; aerospace design; aircraft design; aerodynamic design; structural design; electromagnetic design and physics-based modelling.

# Fig. 1

```
                    ┌─────────┐
                    │  Start  │
                    └────┬────┘
                         │
                         ▼
110 ～           ┌──────────────┐
                 │              │
                 └──────┬───────┘
                        │
                        ▼
120 ～           ┌──────────────┐◄──────────┐
                 │              │           │
                 └──────┬───────┘           │
                        │                   │
                        ▼                   │
130 ～           ┌┬────────────┬┐           │
                 ││            ││           │
                 └┴─────┬──────┴┘           │
                        │                   │
                        ▼                   │
140 ～            ◇──────────────►┌──────────────┐ ～ 150
                  ◇               │              │
                        │         └──────────────┘
                        ▼
                 ┌─────────┐
                 │   End   │
                 └─────────┘
```

# Fig. 2

## EUROPEAN SEARCH REPORT

European Patent Office

Application Number

EP 07 11 8276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZONGZHAO ZHOU ET AL: "Combining global and local surrogate models to accelerate evolutionary optimization" IEEE TRANSACTIONS ON SYSTEMS, MAN AND CYBERNETICS, PART C (APPLICATIONS AND REVIEWS) IEEE USA, vol. 37, no. 1, January 2007 (2007-01), pages 66-76, XP002469649 ISSN: 1094-6977 * the whole document * | 1-10 | INV. G06N3/12 |
| X | ZONGZHAO ZHOU ET AL: "Hierarchical surrogate-assisted evolutionary optimization framework" PROCEEDINGS OF THE 2004 CONGRESS ON EVOLUTIONARY COMPUTATION , 19 - 23 JUNE 2004(IEEE CAT. NO.04TH8753) IEEE PISCATAWAY, NJ, USA, vol. 2, 2004, pages 1586-1593, XP010720726 ISBN: 0-7803-8515-2 * paragraph [0III] - paragraph [00IV] * | 1-10 | |
| X | ZONGZHAO ZHOU ET AL: "A study on polynomial regression and Gaussian process global surrogate model in hierarchical surrogate-assisted evolutionary algorithm" THE 2005 IEEE CONGRESS ON EVOLUTIONARY COMPUTATION , 2 - 5 SEPT 2005,(IEEE CAT. NO. 05TH8834) IEEE PISCATAWAY, NJ, USA, vol. 3, 2005, pages 2832-2839, XP010861744 ISBN: 0-7803-9363-5 * paragraph [0001] - paragraph [03.1] * | 1-10 | TECHNICAL FIELDS SEARCHED (IPC) G06N |

-/--

The present search report has been drawn up for all claims

| Place of search | Date of completion of the search | Examiner |
|---|---|---|
| The Hague | 25 February 2008 | Schenkels, Paul |

EPO FORM 1503 03.82 (P04C01)

**European Patent Office**

## EUROPEAN SEARCH REPORT

Application Number

EP 07 11 8276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEARY S J ET AL: "Global approximation and optimization using adjoint computational fluid dynamics codes" AIAA JOURNAL, AMERICAN INSTITUTE OF AERONAUTICS AND ASTRONAUTICS, US, vol. 42, no. 3, March 2004 (2004-03), pages 631-641, XP008087653 ISSN: 0001-1452 * abstract * * paragraphs [000I], [00II], [00IV] * | 1-3 | |
| A | YEW-SOON ONG ET AL: "Max-min surrogate-assisted evolutionary algorithm for robust design" IEEE TRANSACTIONS ON EVOLUTIONARY COMPUTATION IEEE USA, vol. 10, no. 4, August 2006 (2006-08), pages 392-404, XP002469652 ISSN: 1089-778X * the whole document * | 1-10 | |

TECHNICAL FIELDS
SEARCHED     (IPC)

The present search report has been drawn up for all claims

| Place of search | Date of completion of the search | Examiner |
|---|---|---|
| The Hague | 25 February 2008 | Schenkels, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

**Non-patent literature cited in the description**

- Special Issue on Memetic Algorithms. IEEE Transactions on Systems, Man and Cybernetics - Part B. February 2007, vol. 37